(19) Europäisches Patentamt
European Patent Office
Office européen des brevets

(11) EP 2 708 278 A1

(12) EUROPEAN PATENT APPLICATION

(43) Date of publication:
19.03.2014 Bulletin 2014/12

(51) Int Cl.:
*B01D 61/36* (2006.01) *C02F 1/44* (2006.01)
*C02F 101/32* (2006.01)

(21) Application number: 13181062.4

(22) Date of filing: 20.08.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 12.09.2012 US 201261699921 P

(71) Applicants:
- Rohm and Haas Company
Philadelphia,
Pennsylvania 19106-2399 (US)
- Dow Global Technologies LLC
Midland, MI 48674 (US)

(72) Inventors:
- CARPENTER, James Kent
Lambertville, NJ New Jersey 08530 (US)
- FRANK, Timothy C.
Midland, MI Michigan 48542 (US)

(74) Representative: Buckley, Guy Julian
Patent Outsourcing Limited
1 King Street
Bakewell
Derbyshire DE45 1DZ (GB)

# (54) Multiple membranes for removing VOCs from liquids

(57) The present invention relates to a process for removing volatile organic compounds (VOCs) from a liquid stream using multiple membranes that are permeable to the VOCs but impermeable to the liquid.

EP 2 708 278 A1

## Description

Background of the Invention

The present invention relates to a process for removing volatile organic compounds (VOCs) from a liquid, such as a latex, using multiple membranes.

Latex paints often contain VOCs at levels that produce undesirable odors. These VOCs, typically ppm levels of low molecular weight ketones, alcohols, acetates, and aldehydes, are not essential for the paint's performance but are added to facilitate various steps in the paint's manufacture. Accordingly, paints free of these odor producing agents are desired.

Removal or "stripping" of trace amounts of low molecular weight organics can be accomplished by contacting a liquid containing VOCs with a gas, such as air, or nitrogen, or steam. The gas can be passed through a sparger to create large numbers of small bubbles dispersed within the liquid. The bubbles rise to the surface of the bulk liquid, carrying a portion of the VOCs with them. Other well-known methods for carrying out stripping operations involve contacting liquid and gas in a trayed or a packed stripping tower. In all of these devices, the organic compounds transfer from the liquid phase to the gas phase due to favorable liquid-vapor equilibrium partition ratios or relative volatilities.

Although these conventional stripping processes are widely used for treating aqueous streams, these techniques are not as efficient for removing VOCs from latexes. First, because latexes are stabilized by significant amounts of surfactant, sparging produces high volumes of foam during the stripping operation, thereby causing major problems in the processing and packaging of the finished latex. Second, there is a need for a more economical process that can increase interfacial area for mass transfer and thus reduce the size and cost of the stripping equipment. It would therefore be an advance in the art of VOC removal to find a way to reduce concentrations of VOCs in latex paints in a more efficient manner.

Summary of the Invention

The present invention relates to a process comprising the steps of:

a1) passing a VOC-containing liquid stream across a first surface of a first membrane housed in a first membrane module; then

b1) directing at least a portion of the liquid stream to pass across a first surface of a second membrane housed in a second membrane module; then

c1) directing at least a portion of the liquid stream from b1 to exit through a first outlet;

and, concomitant with the passing of the liquid stream across the first surfaces of the first and second membranes;

a2) passing a stream of stripping gas across a second surface of the second membrane; then b2) directing at least a portion of the stream of stripping gas across a second surface of the first membrane; then

c2) directing at least a portion of the stripping gas from b2 to exit through a second outlet;

wherein the flow of the stripping gas is countercurrent with the flow of the liquid stream;
wherein a portion of the liquid is recirculated across the first surface of the first membrane or the first surface of the second membrane or both, and/or a portion of the stripping gas is recirculated across the second surface of the second membrane or the second surface of the first membrane or both.

The present invention addresses a need in the art by providing an efficient way of removing VOCs from a liquid such as a latex.

Brief Description of the Drawings

FIG. 1 and FIG. 2 are schematics of embodiments of a process for removing VOCs from a latex using multiple membrane modules.

FIG. 3 illustrates the relationship developed between the mass transfer coefficient across the membrane and the feed rate of a latex.

Detailed Description of the Invention

The present invention addresses a need in the art by providing a process comprising the steps of:

a1) passing a VOC-containing liquid stream across a first surface of a first membrane housed in a first membrane module; then

b1) directing at least a portion of the liquid stream to pass across a first surface of a second membrane housed in a second membrane module; then

c1) directing at least a portion of the liquid stream from b1 to exit through a first outlet;

and, concomitant with the passing of the liquid stream across the first surfaces of the first and second membranes;

a2) passing a stream of stripping gas across a second surface of the second membrane; then

b2) directing at least a portion of the stream of stripping gas across a second surface of the first membrane; then

c2) directing at least a portion of the stripping gas from b2 to exit through a second outlet;

wherein the flow of the stripping gas is countercurrent with the flow of the liquid stream;
wherein a portion of the liquid is recirculated across the first surface of the first membrane or the first surface of the second membrane or both, and/or a portion of the stripping gas is recirculated across the second surface of the second membrane or the second surface of the first membrane or both.

The present invention relates to a process for removing VOCs from a liquid stream by way of multiple membranes, each of which are advantageously housed in modules, which membranes provide an efficient means of stripping VOCs from a liquid feed such as latex, surfactant-laden wastewater, or brine, with internal recycle of a stripping gas. The process of the present invention strips VOCs from the feed with minimal consumption of stripping gas, such as air or nitrogen or steam, for good economy of operation. The process minimizes stripping gas by using multi-stage countercurrent processing with multiple membrane modules and by recycling (recirculating) a portion of the stripping gas within the process. In one embodiment of the invention, stripping gas is recycled to boost the gas velocity within a given module to improve mass transfer efficiency, thereby further reducing the amount of stripping gas required to strip VOCs to a desired level. In another embodiment, the liquid feed is recycled to boost the liquid velocity within a module in order to improve mass transfer efficiency, thereby reducing the transfer area and module size to strip VOCs to a desired level.

The first and second membranes (and optionally more membranes), which may be the same or different, are characterized by being permeable to VOCs and impermeable to the liquid. In one aspect, each membrane is a nanoporous hydrophobic polymeric membrane characterized by pore diameters in the range of 1 nm to 1000 nm, preferably in the range of 1 nm to 100 nm. In this aspect, the polymer is sufficiently hydrophobic so that water does not readily wet the clean polymer membrane surface prior to use, that is, so that water tends to form spherical beads of water droplets rather than thin films on the surface of the polymer. Thus, the nanoporous membrane is sufficiently hydrophobic to inhibit transport of liquid water through the membrane by, for example, wicking or pressure driven transport of water into the membrane. Examples of hydrophobic materials suitable for the nanoporous membrane include polyethylene, polypropylene, ethylene-propylene copolymer, polyvinylidene fluoride, or polytetrafluoroethylene.

The membranes may also be nonporous but highly permeable to organic solutes that are to be removed. Materials suitable for this membrane include cellulose acetate and crosslinked polyvinylalcohol. The membranes can be all nanoporous or all nonporous and highly permeable to organic solutes or combinations thereof.

One or more of the membranes may also comprise a composite membrane, which is a thin nanoporous or nonporous film supported on the surface of a thicker support membrane that provides mechanical strength. This support membrane is preferably macroporous, with pore diameters typically in the range of 1000 nm to 10,000 nm, to facilitate transport to the discriminating film. The support membrane may be made of any polymer with the required mechanical strength, including hydrophobic and hydrophilic polymers.

The membranes are preferably provided in the form of modules, which are housings for the membrane, most commonly a hollow fiber membrane module, a plate and frame membrane module, a flat spiral wound membrane module, a shell and tube module (also known as a fiber bundle module), or a combination thereof. These modules are well known in the art.

Referring to FIG. 1, which represents a schematic of a preferred 2-membrane embodiment of the invention, a VOC-containing liquid stream, preferably a latex, is directed from an inlet (10) to a first membrane module (20) housing a first membrane (22) having a first surface (22a) and a second surface (22b). The liquid flows across the first surface (22a) of the first membrane (22); a first part of the liquid then exits the first module (20) while a second part of the liquid is recirculated through the first module (20) and across the first surface (22a) of the first membrane (22). The exiting liquid passes to a second module (30) housing a second membrane (32) having a first surface (32a) and a second surface (32b). The liquid passes across the first surface (32a) of the second membrane (32), and a portion of the liquid is preferably recirculated through the second module (30) across the first surface (32a) of the second membrane (32) while another portion exits through outlet (40).

VOCs pass from the liquid through the first membrane (22) and are carried away from the first module (20) by a flowing stream of stripping gas, which is countercurrent to the liquid stream. The stripping gas is fed initially from an inlet (50) through the second membrane module (30) and then to the first membrane module (20) across a second surface (22b) of the first membrane (22). A part of the vapor stream containing the VOCs leaves the first module (20) and flows to the vapor outlet (60). A part of the vapor stream containing the VOCs may also be recirculated back to the inlet of the first module (20). The stripping gas, which is passed across the second surface (32b) of the second membrane (32), is preferably not recirculated through the second module (30) because this second module (30) is used as a polishing module to achieve very low residual VOC levels in the treated liquid. This vapor stream is advantageously treated to eliminate the VOC wastes using methods known in the art before releasing the vapor into the atmosphere.

As used herein, the terms "first" and "second," in reference to membranes and modules, have different meanings depending on the number of membranes and modules used in the process of the present invention. For a 2-module system, the first module is the module proximal to the liquid stream inlet while the second module is the module proximal to the stripping gas inlet. For a system comprising three or more modules, the first module can be any module except the module closest to the inlet for the stripping gas while the second module can be any module except the module closest to the liquid stream inlet. Thus, one or more ancillary modules housing one or more ancillary membranes having first and second surfaces may be placed in series with the first and second modules. The liquid stream passes across the first surface or surfaces of the one or more ancillary membranes and may optionally be recirculated across any or all of the first surface or surfaces of the one or more ancillary membranes; similarly, the stripping gases pass across the second surface or surfaces of the one or more ancillary membranes and may optionally be recirculated across any or all of the second surface or surfaces of the one or more ancillary membranes.

FIG. 2 illustrates a schematic for a 3-module set-up. The total number of modules is dictated by the overall economics of the process. In this embodiment, an ancillary module (300) housing an ancillary membrane (320) is placed between the first module (200) and the second module (400), with liquid flowing across the first surface (320a) of the ancillary membrane (320), with a portion of the liquid recirculated through the ancillary membrane and a portion exiting and passing through the second module (400) as described above. The stripping gas flows from the second module across the second surface (320b) of the ancillary membrane (320); a part of the stripping gas is preferably recirculated back to the inlet of the ancillary module (300) and another part is directed to the first module (200) as described above.

The process of the present invention may also include a means for removing a portion of the VOC content from the VOC-laden stripping gas. For example, a pressure-swing adsorption (PSA) unit may be added to a gas-recycle loop to remove a portion of the organic content, thereby reducing the need to inject clean gas from an external source. Such a PSA unit is operated in a cyclical manner: for a dual-bed system using activated carbon adsorbent, one adsorbent bed removes VOCs from the stripping gas while the other bed is regenerated at reduced pressure, as disclosed in U.S. Patent 4,857,084. A small amount of cleaned gas can be used as backpurge to flush the regenerating bed of organics. The organic-laden backpurge gas can then be cooled below the dew-point of the VOCs, thereby condensing the VOCs and removing a portion from the stripping process. The saturated backpurge gas can then be recycled to the inlet to the on-line adsorbent bed.

Other types of adsorption processes include adsorbing organics from the stripping gas onto a bed of activated carbon adsorbent, followed by thermally regenerating the bed using steam. The VOC-laden stripping gas also may be processed in a thermal or catalytic oxidizer to destroy the VOC content, and a portion of the treated gas may be recycled back to the modules. Such processes are well-known in the art.

Where the stripping gas, preferably steam, contains a relatively high concentration of hydrophobic VOCs, a portion of the VOC content may be isolated from the process by condensing the organic-laden steam, decanting an organic layer that forms in a condensate decanter vessel (separation vessel), and re-boiling the aqueous condensate layer that remains after decanting the organic layer. A variety of well-known heat exchangers and mechanical vapor recompression (heat pump) strategies may be used to reduce energy consumption.

The process of the present invention is capable of reducing the VOC content in a relatively high solids content latex to a level that eliminates or substantially eliminates odor from malodorous components, or reduces the level of toxic components to innocuous levels, cleanly and efficiently.

This process configuration advantageously allows for flow rates of liquid or gas or both to be adjusted and optimized within a first membrane module, independent of the overall gas-to-liquid ratio used for the process. This processing flexibility provides operation of the first module at optimal liquid and gas velocities for good mass transfer performance independent of the amount of stripping gas used to treat a given amount of liquid.

Process configurations include two or more membrane modules wherein liquid or stripping gas or both are recycled within one or more of the modules; however, stripping gas is preferably not recycled around the module proximal to the stripping gas inlet (i.e., the polishing module). The preferential avoidance of recycling stripping gas around the polishing module results in a reduction of VOCs to very low levels because the gas used for stripping is clean gas that has not been contaminated with organics from recycled gas. Thus, the invention uses recycle of liquid or gas or both for optimal mass transfer at relatively high VOC concentrations with minimal use of stripping gas; the combination of recycling and processing in a polishing module using only clean stripping gas results in very low residual VOCs in the treated liquid.

Varying the recycle rate at each module allows optimization of VOC removal overall. For a process with three or more membrane modules, the stripping gas recycle rates can be adjusted for each module - preferably, highest for the feed module where VOC concentrations are highest, somewhat lower recycle to the next module where VOC concentrations are lower, and zero recycle to the module proximal to the inlet for the stripping gas, where VOC concentrations are lowest. Liquid may be recycled at each module.

Example

The following example is for illustrative purpose only and is not intended to limit the scope of the invention.

Example 1: Extraction Optimization Using a 2-Stage Membrane

The following example demonstrates extraction optimization using a 2-stage membrane setup as shown in Fig 1. The outlet latex VOC concentration for a 2-membrane system can be estimated when the inlet VOC concentration is known. If a latex inlet VOC concentration is 500 ppm and a feed rate of latex is 0.02 mL/s, the outlet VOC concentration is estimated to be 175 ppm using two membrane modules and no recycle of latex. The governing equation used for this calculation is as follows:

$$m\,(C_{in} - C_{out}) = k\,A\,\frac{(C_{in} - C_{out})}{\ln\left(\frac{C_{in}}{C_{out}}\right)}$$

<m> = flow rate of latex, mL/s
<$C_{in}$> = concentration of VOC in feed latex, ppm
<$C_{out}$> = concentration of VOC in exit latex, ppm
<k> = mass transfer coefficient, cm/s
<A> = membrane area, $cm^2$

To lower the outlet VOC concentration, the recycle flow rate was increased but the net flow rate through each module was kept the same. For this example, enough latex was recycled to achieve a total flow rate to the module of 0.06 mL/s (0.04 mL/s recycle flow rate), which was the flow rate at which the mass transfer coefficient reached its peak. At this recycle rate, the exit VOC level was calculated to be 65 ppm.

No advantage to increasing the amount of recycle is realized once the mass transfer coefficient stops increasing. When the total flow through the module was increased to 0.08 mL/s, and 0.07 mL/s of the latex was recycled around the module, the exit VOC level was calculated to be 75 ppm, representing an increase of about 10 ppm. The optimum recycle rate is therefore 0.04 mL/s.

FIG. 3 illustrates the relationship between the mass transfer coefficient across the membrane and the feed rate of the latex to the membrane. The latex is RHOPLEX™ AC261 Acrylic Latex (A Trademark of The Dow Chemical Company or Its Affiliates), and contains residual acetone, t-butanol, dibutyl ether, and butyl propionate. The mass transfer coefficient has the following dependence: a linear increase in mass transfer coefficient for flow rates up to about 0.06 mL/s and a flat region with no change in mass transfer coefficient for flow rates above 0.06 mL/s. In these experiments the vapor feed is humidified air and its flow rate is not changed.

**Claims**

**1.** A process comprising the steps of:

a1) passing a VOC-containing liquid stream across a first surface of a first membrane housed in a first membrane module; then
b1) directing at least a portion of the liquid stream to pass across a first surface of a second membrane housed in a second membrane module; then
c1) directing at least a portion of the liquid stream from b1 to exit through a first outlet;

and, concomitant with the passing of the liquid stream across the first surfaces of the first and second membranes;

a2) passing a stream of stripping gas across a second surface of the second membrane; then
b2) directing at least a portion of the stream of stripping gas across a second surface of the first membrane; then
c2) directing at least a portion of the stripping gas from b2 to exit through a second outlet;

wherein the flow of the stripping gas is countercurrent with the flow of the liquid stream;
wherein a portion of the liquid is recirculated across the first surface of the first membrane or the first surface of the second membrane or both, and/or a portion of the stripping gas is recirculated across the second surface of the second membrane or the second surface of the first membrane or both.

**2.** The process of Claim 1 wherein a portion of the liquid is recirculated across the first surface of the first membrane.

**3.** The process of Claim 2 wherein a portion of the liquid is recirculated across the first surface of the second membrane and a portion of the stripping gas is recirculated across the second surface of the first membrane.

**4.** The process of any of Claims 1 to 3 wherein the second module is a polishing module wherein the stripping gas is not recirculated across the second surface of the second membrane.

**5.** The process of any of Claims 1 to 4, wherein

a) the stripping gas is steam;
b) the liquid is a latex; and
c) the first and second membranes are nanoporous membranes.

**6.** The process of any of Claims 1 to 5 which further includes the steps of:

a3) directing a portion of the liquid stream across one or more first surfaces of one or more ancillary membranes housed in one or more ancillary modules situated in series with the first and the second modules; and
b3) optionally directing a portion of the liquid stream to recirculate across one or more first surfaces of the one or more ancillary membranes and optionally directing a portion of the stripping gas to recirculate across one or more second surfaces of the one or more ancillary membranes.

**7.** A process comprising the steps of:

a1) passing a VOC-containing liquid stream across a first surface of a first membrane housed in a first membrane module;
b1) recirculating a portion of the liquid stream across the first surface of the first membrane and directing another portion of the liquid stream to pass across a first surface of a second membrane housed in a second membrane module; then
c1) recirculating a portion of the liquid stream across the first surface of the second membrane; and
d1) directing another portion of the liquid stream from c1 to exit through a first outlet;

and, concomitant with the passing of the liquid stream across the first surfaces of the first and second membranes;

a2) passing a stream of stripping gas across a second surface of the second membrane;
b2) directing the stream of stripping gas across a second surface of the first membrane;
c2) recirculating a portion of the stripping gas across the second surface of the first membrane; and
d2) directing another portion of the stripping gas from c2 to exit through a second outlet;

wherein the flow of the stripping gas is countercurrent with the flow of the liquid stream.

**8.** The process of Claim 7 wherein the first and second membranes are nanoporous membranes housed in the modules and the stripping gas is steam.

**9.** The process of either of Claims 7 or 8 wherein the second module is a polishing module wherein stripping gas is not recirculated across the second surface of the second membrane.

FIG. 1 – Schematic of Process with Two Membrane Modules

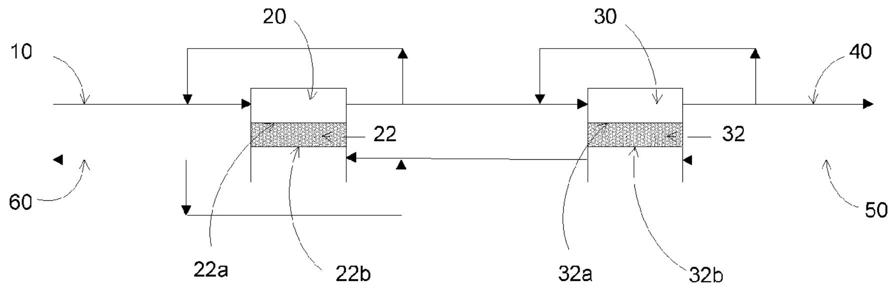


FIG. 2 – Schematic of Process with Three Membrane Modules

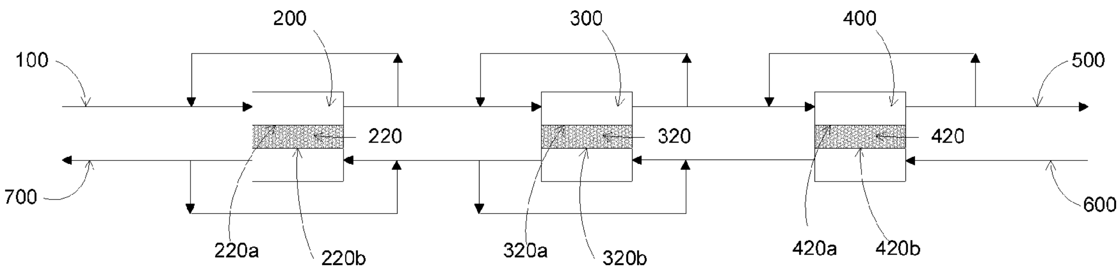

FIG. 3

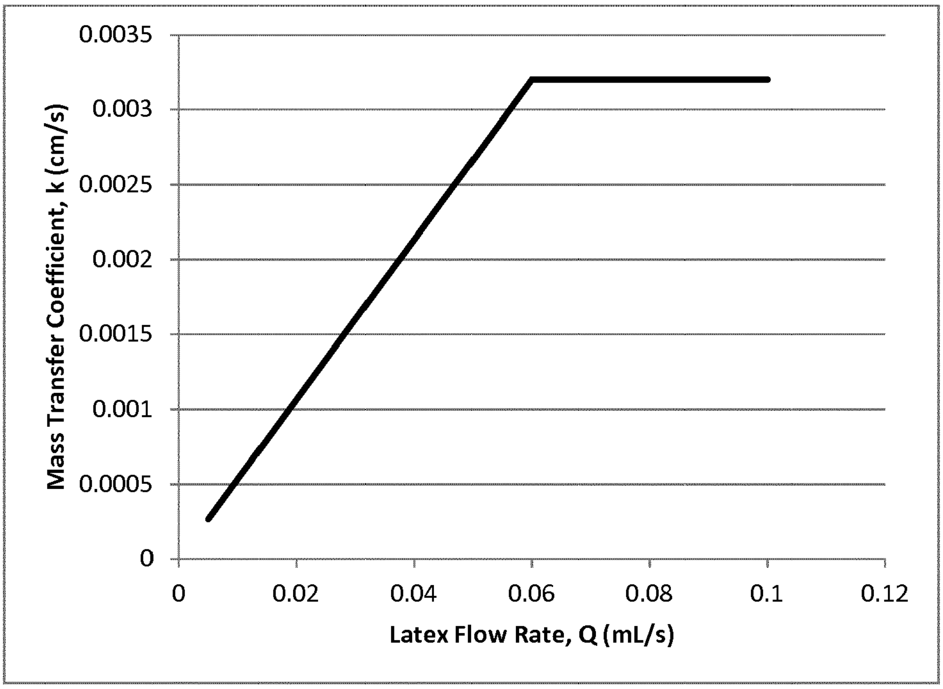
0.0035
0.003
0.0025
0.002
0.0015
0.001
0.0005
0
Mass Transfer Coefficient, k (cm/s)
0
0.02
0.04
0.06
0.08
0.1
0.12
Latex Flow Rate, Q (mL/s)

Europäisches Patentamt
European Patent Office
Office européen des brevets

# EUROPEAN SEARCH REPORT

Application Number
EP 13 18 1062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/272500 A1 (KELLER ARTURO A [US] ET AL) 7 December 2006 (2006-12-07)<br>* paragraphs [0023] - [0025], [0030], [0034], [0041] *<br>----- | 1-9 | INV.<br>B01D61/36<br>C02F1/44<br>C02F101/32 |
| Y | WO 01/44350 A1 (APEX MEDICAL TECH [US]) 21 June 2001 (2001-06-21)<br>* page 1, lines 5-10; examples 5-6 *<br>----- | 1-9 | |
| Y | GB 2 346 095 A (MEMBRANE EXTRACTION TECH LTD [GB]) 2 August 2000 (2000-08-02)<br>* claims 1,11,25-27,30-31; figure 4 *<br>----- | 1-9 | |
| Y | Richard W. Baker: "Membrane Technology and Applications",<br>2004, John Wiley & Sons, Ltd, Chichester, XP002717954,<br>pages 182-189,<br>* pages 182-183 - pages 186-187 *<br>----- | 4,9 | |
| | | | TECHNICAL FIELDS SEARCHED (IPC) |
| | | | B01D<br>C02F |

The present search report has been drawn up for all claims

1

| Place of search | Date of completion of the search | Examiner |
|---|---|---|
| Munich | 16 December 2013 | Veríssimo, Sónia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................
& : member of the same patent family, corresponding document

EPO FORM 1503 03.82 (P04C01)

**ANNEX TO THE EUROPEAN SEARCH REPORT ON EUROPEAN PATENT APPLICATION NO.** EP 13 18 1062

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2013

| Patent document cited in search report | Publication date | Patent family member(s) | Publication date |
|---|---|---|---|
| US 2006272500 A1 | 07-12-2006 | NONE | |
| WO 0144350 A1 | 21-06-2001 | AU 3120400 A | 25-06-2001 |
| | | EP 1242511 A1 | 25-09-2002 |
| | | JP 2003517073 A | 20-05-2003 |
| | | WO 0144350 A1 | 21-06-2001 |
| GB 2346095 A | 02-08-2000 | AU 3061800 A | 07-08-2000 |
| | | GB 2346095 A | 02-08-2000 |
| | | WO 0043112 A1 | 27-07-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4857084 A